(19) Europäisches Patentamt
European Patent Office
Office européen des brevets

(11) Veröffentlichungsnummer: **0 000 561**
**B1**

(12) # EUROPÄISCHE PATENTSCHRIFT

(45) Veröffentlichungstag der Patentschrift: **14.10.81**

(51) Int. Cl.³: **C 08 G 65/32,**
C 08 L 71/02, C 08 G 59/50

(21) Anmeldenummer: **78100466.8**

(22) Anmeldetag: **21.07.78**

(54) **Wasserlösliche, vernetzte stickstoffhaltige Kondensationsprodukte und deren Verwendung.**

(30) Priorität: **28.07.77 DE 2733973**

(43) Veröffentlichungstag der Anmeldung:
**07.02.79 Patentblatt 79/3**

(45) Bekanntmachung des Hinweises auf die Patenterteilung:
**14.10.81 Patentblatt 81/41**

(84) Benannte Vertragsstaaten:
**BE CH DE FR GB NL SE**

(56) Entgegenhaltungen:
**BE - A - 554 506**
**DE - A - 1 546 290**
**DE - A - 2 638 955**
**FR - A - 2 257 623**
**FR - A - 2 280 670**
**GB - A - 961 891**
**US - A - 3 129 133**

(73) Patentinhaber: **BASF Aktiengesellschaft**
**Carl-Bosch-Strasse 38**
**D-6700 Ludwigshafen (DE)**

(72) Erfinder: **Streit, Werner, Dr.**
**Im Woogtal 11**
**D-6719 Bobenheim (DE)**
Erfinder: **Fikentscher, Rolf, Dr.**
**von-Stephan-Strasse 27**
**D-6700 Ludwigshafen (DE)**
Erfinder: **Gans, Karl**
**Ungsteiner Strasse 1**
**D-6700 Ludwigshafen (DE)**
Erfinder: **Welzel, Gerhard, DR.**
**Gontardstrasse 6**
**D-6800 Mannheim 1 (DE)**
Erfinder: **Glaser, Klaus**
**Neuweg 14**
**D-6704 Mutterstadt (DE)**
Erfinder: **Schaefer, Emil**
**Petersstrasse 54**
**D-6700 Ludwigshafen (DE)**

EP 0 000 561 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Wasserlösliche, vernetzte stickstoffhaltige Kondensationsprodukte und deren Verwendung

Die Erfindung betrifft wasserlösliche, vernetzte stickstoffhaltige Kondensationsprodukte, deren Viskosität in wäßriger Lösung bei Temperaturerhöhung ansteigt und bei Temperaturerniedrigung wieder abfällt.

Aus der US—PS 3 347 803 sind unvollständig kondensierte, in alkalischem Milieu härtbare Harze bekannt, die durch Umsetzung von Polyätherchlorhydrinen, deren Polyätherkette 3 bis 70 Alkylenoxideinheiten aufweist, mit Polyaminen oder Ammoniak in bestimmten Molverhältnisse hergestellt werden. Die Produkte werden als härtbare Überzüge für Metall und Glas sowie als Textilausrüstungsmittel verwendet. Die Viskosität wäßriger Lösungen der Kondensationsprodukte sinkt mit steigender Temperatur.

Aus der FR—PS 2 280 670 ist bekannt, wasserlösliche stickstoffhaltige Kondensationsprodukte herzustellen, in dem man ein Stickstoffäquivalent eines 15 bis 500 Alkylenimineinheiten enthaltenden mit Polyalkylenpolyamins mit 0,08 bis 0,001 Mol-Teilen eines Polyäthervernetzers bei Temperaturen von 20 bis 100°C bis zur Bildung gerade noch wasserlöslicher Kondensationsprodukte reagieren läßt, die bei einer Temperatur von 20°C in 20 bis 25%iger wäßriger Lösung eine Viskosität von mehr als 300 mPas haben. Der polyäthervernetzer wird durch Umsetzung von Polyalkylenoxiden, die mindestens 8 Alkylenoxideinheiten enthalten, mit Epichlorhydrin hergestellt, wobei die endständigen OH—Gruppen des Polyalkylenoxids durch Glycidyl-Gruppen ersetzt werden. Als Alkylenoxide kommen auch Blockcopolymerisate in Betracht, die aus Äthylenoxid-Propylenoxid- und Äthylenoxid-Blöcken aufgebaut sind.

Aus der DE—OS 1 546 290 ist bekannt, Umsetzungsprodukte von Aminen mit wasserlöslichen polyfunktionellen Derivaten von Polyäthylenglykolen welche Chlorhydrin- und/oder Glycidyl-Gruppen enthalten, als Flotationsmittel für die Faser- und Füllstoffrückgewinnung aus Papiermaschinenabwässern zu verwenden.

Aus der BE—PS 554 506 ist ein Verfahren zur Herstellung von Kondensationsprodukten durch Umsetzung von $\alpha$, $\omega$-Diestern von Polyalkylenglykolen mit Di- oder Polyaminen bekannt.

In der GB—PS 961 891 ein Verfahren zur Herstellung von Kondensationsprodukten beschrieben, bei dem man Diglycidyläther von Polyalkylenglykolen oder von Blckcopolymerisaten mit mehr als der äquimolaren Menge eines Polyamins umsetzt.

Aus der FR—PS 2 257 623 sind Polyalkylenglykolpolyamine bekannt, die dadurch erhalten werden, daß man ein Polyalkylenglykol mit 5 bis 50 Alkylenoxid-Einheiten zunachst mit Chlorwasserstoff zu den entsprechenden $\alpha$, $\omega$-Dichlorverbindungen umsetzt und diese dann mit einem Polyamin reagieren läßt.

Gemäß der US—PS 3 129 133 werden Glycidylpolyäther von mehrwertigen Alkoholen, u.a. auch von Polyäthylenglykolen, mit polyfunktionellen Epoxihärtungsmitteln, wie Polyaminen, in Gegenwart von Wasser umgesetzt.

In keiner der oben angegebenen Literaturstellen findet sich ein Hinweis, daß bei der Kondensation Produkte erhalten werden, deren Viskosität in wäßriger Lösung bei Erhöhung der Temperatur der wäßrigen Lösung ansteigt.

In der DE—OS 26 38 955 werden wasserlösliche vernetzte stickstoffhaltige Kondensationsprodukte beschrieben, deren Viskosität in wäßriger Lösung bei Temperaturerhöhung ansteigt und die erhalten werden durch Umsetzung von Chlorhydrinäthern von Blockcopolymerisaten aus Äthylenoxid und Propylenoxid mit Äthylenimin im Gewichtsverhältnis 1:0,1 bis 0,8.

Aufgabe der Erfindung ist es, wasserlösliche Harze zur Verfügung zu stellen, deren Viskosität in wäßriger Lösung bei Temperaturerhöhung ansteigt und bei Temperaturerniedrigung wieder abfällt.

Gegenstand der Erfindung sind wasserlösliche, vernetzte stickstoffhaltige Kondensationsprodukte, deren Viskosität in wäßriger Lösung bei Temperaturerhöhung ansteigt und bei Temperaturerniedrigung wieder abfällt, hergestellt durch Umsetzung eines Blockcopolymerisates der Formel

$$R-O-(CH_2-CH_2-O-)_x-(CH_2-\underset{}{\overset{CH_3}{\overset{|}{C}H}}-O)_y-(CH_2-CH_2-O)_x-R \qquad (I),$$

in der $R = H-(OCH_2-\underset{CH_2Cl}{\underset{|}{C}H}-)_n$ mit n = 0,75 bis 3,

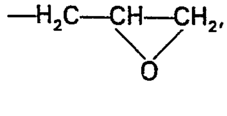, 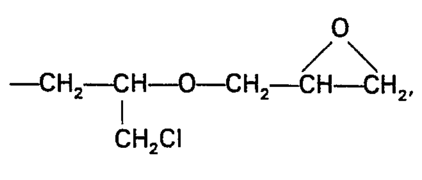, $-\underset{\overset{\|}{O}}{C}-Cl$ oder $-CH_2-CH_2-Cl$ und

$x = 50$ bis 250, $y = 20$ bis 100 und das Verhältnis $x:y = 6{,}5:1$ bis 1:15 ist, mit mindestens 4 basische NH-Gruppen enthaltenden Verbindungen aus den Gruppen

1. Polyaminen der Formel

$$H-\overset{R}{\overset{|}{N}}-\left[C_nH_{2n}\overset{R}{\overset{|}{N}}\right]_{3-500}-H$$

$R = H$,
$C_1$— bis $C_4$—Alkyl,
$C_1$— bis $C_6$—Alkylsulfonate
und $—CH_2—COOH$, wobei mindestens $2R = H$ $n = 2—4$,

2. Kondensationsprodukten von Ammoniak und Aminen mit Äthylenchlorid, Epichlorhydrin oder kurzkettigen Dichlorhydrinäthern,

3. Umsetzungsprodukten aus kurzkettigen Diepoxiden mit Diäthylentriamin oder Methylamin,

4. Kondensationsprodukten aus Harnstoff und Di- oder Polyaminen oder

5. Kondensationsprodukten aus Polyaminen mit Dicarbonsäuren, die 4 bis 10 Kohlenstoffatome enthalten,

im Gewichtsverhältnis 0,8:1 bis 30:1 in einem polaren Lösungsmittel bei Temperaturen von 20 bis 180°C.

Die Verbindungen der Formel I werden durch Einführung von reaktiven Gruppen in Blockcopolymerisate der Formel

$$HO(CH_2—CH_2—O)_x—(CH_2—\overset{CH_3}{\overset{|}{C}H}—O)_y—(CH_2—CH_2—O)_x—H \qquad (II)$$

wobei $x = 50$ bis 250, $y = 20$ bis 100 und das Verhältnis $x:y = 6{,}5:1$ bis 1:15 bedeutet, hergestellt.

Die Verbindungen der Formel II erhält man beispielsweise, indem man an Polypropylenglykol, das 20 bis 100 Propylenoxideinheiten enthält, Äthylenoxid anlagert. Das Molverhältnis von Äthylenoxid zu Propylenoxideinheiten im Blockmischpolymerisat wird bei der Umsetzung so gewählt, daß es in dem Bereich von 6,5:1 bis 1:15 liegt und der Äthoxylierungsgrad pro Hydroxylgruppe im Polypropylenglykol 50 bis 250, vorzugsweise 75 bis 150 beträgt. Um in dieses Blockmischpolymerisat reaktive Gruppen einzuführen, kann man es beispielsweise mit Epichlorhydrin im Molverhältnis 1:1,5 bis 6 umsetzen. Diese Umsetzung wird in Substanz oder in einem Lösungsmittel unter Verwendung von Lewissäuren vorgenommen. Als Lewissäure werden vor allem Bortrifluoridätherate, Komplexe von Bortrifluorid mit Essigsäure, Phosphorsäure sowie $AlCl_3$, $ZnCl_2$, $FeCl_3$, $SnCl_4$, $H_2SO_4$ und $HClO_4$ verwendet. Bei der Umsetzung von Verbindungen der Formel II mit Epichlorhydrin erhält man Verbindungen der Formel I, bei denen der Substituent R =

$$H—(OCH_2—\underset{CH_2Cl}{\underset{|}{C}H}—)_{0{,}75 \text{ bis } 3} \qquad \text{ist}$$

Behandelt man die so hergestellten Produkte mit Basen wie Kaliumhydroxid oder Natriumhydroxid, so erhält man die entsprechenden Diepoxide. In diesem Fall ist der Substituent R in Formel I gleich

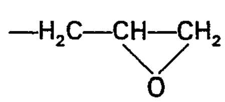

Sofern jedoch der reaktive Rest R in Formel I für 2 bzw. 3 Epichlorhydrineinheiten steht, erhält man bei der Umsetzung dieser Verbindungen mit Basen Reaktionsprodukte der Formel I, in denen der Susbtituent R dann die Bedeutung

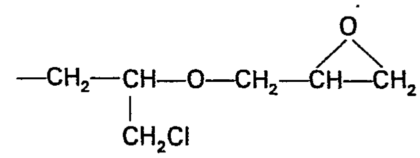

hat.

Außerdem können in Verbindungen der Formel II reaktive Gruppen dadurch eingeführt werden, daß man sie mit Phosgen zur Reaktion bringt. In diesem Fall hat der Substituent R in Formel I die Bedeutung

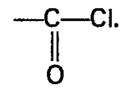

Bei der Umsetzung von Verbindungen der Formel II mit Phosphortrichlorid erhält man die entsprechenden Dichloride, in denen der Substituent R der Formel I die Bedeutung $-CH_2-CH_2-Cl$ hat. Die Umsetzungen von Verbindungen der Formel II mit den genannten Verbindungsklassen kann in einem weiten Temperaturbereich durchgeführt werden, z.B. in dem Bereich von 10 bis 120°C. In der Regel ist es vorteilhaft, ein polares Lösungsmittel zu verwenden, man kann die Umsetzung jedoch auch in Abwesenheit von Lösungsmitteln durchführen.

Um die erfindungsgemäßen wasserlöslichen, vernetzten stickstoffhaltigen Kondensationsprodukte herzustellen, werden die Verbindungen der Formel I mit Verbindungen umgesetzt, die mindestens vier basische NH—Gruppen enthalten, z.B. Polyamine. Von den Polyaminen kommen ebenfalls nur diejenigen Verbindungen in Betracht, die mindestens vier basische NH—Gruppen im Molekül aufweisen. Diese Verbindungen können beispielsweise mit Hilfe folgender Formel charakterisiert werden.

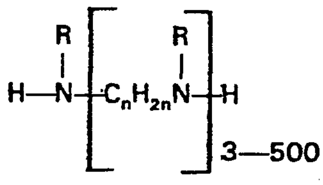
,

R = H,
$C_1$— bis $C_4$—Alkyl,
$C_1$— bis $C_6$—Alkylsulfonate
und $-CH_2-COOH$, wobei mindestens 2R = H n = 2—4,

Als Verbindungen, die vier basische NH—Gruppen enthalten, sind auch Kondensationsprodukte von Ammoniak und Aminen mit Äthylenchlorid, Epichlorhydrin, kurzkettigen Dichlorhydrinäthern, geeignet, z.B. Kondensationsprodukte aus Ammoniak und dem Dichlorhydrinäther des Äthylenglykols, aus Äthylendiaminen und Äthylenchlorid bzw. aus Äthylendiamin und Epichlorhydrin sowie auch Umsetzungsprodukte aus kurzkettigen Diepoxiden z.B. Butadiol-1,4-bisglycidyläther oder Äthylenglykolbisglycidyläther mit Diäthylentriamin oder Methylamin und Kondensationsprodukte aus Harnstoff und Di- oder Polyaminen, z.B. Äthylendiamin, Diäthylentriamin und Tris-3-aminopropylamin. Als Diepoxide kommen auch kurzkettige Bisglycidylamine in Betracht. Die in Betracht kommenden Amine enthalten mindestens eine NH—NH—Gruppe. Zu den geeigneten Aminen gehören Mono- und Polyamine, die mindestens eine NH—Gruppe enthalten, z.B. Methylamin, Äthylamin, Dimethylamin, Äthylendiamin, Diäthylentriamin und Polyäthylenimin. Die Viskosität der Kondensationsprodukte von Ammoniak und den in Betracht kommenden Aminen beträgt höchstens 2 500 mPas (gemessen in 50%iger wäßriger Lösung bei 20°C) und liegt im allgemeinen in dem Bereich von 30 bis 1 700 mPas.

Als Verbindungen, die mindestens vier basische NH—Gruppen enthalten, kommen auch Kondensationsprodukte aus Polyaminen mit Dicarbonsäuren in Betracht, die 4 bis 10 Kohlenstoffatome enthalten, beispielsweise Bernsteinsäure, Maleinsäure, Adipinsäure, Glutarsäure, Sebacinsäure, und Terephthalsäure. Die geeigneten Polyamine haben 2 bis 6 Alkylenbrücken zwischen den primären Aminogruppen. Vorzugsweise verwendet man für die Kondensation mit den genannten Dicarbonsäuren Polyamine, die 3 bis 10 basische Stickstoffatome im Molekül aufweisen. Beispielsweise seien Diäthylentriamin, Triäthylentetramin, Tetraäthylenpentamin, Dipropylentriamin, Tripropylentetramin und Dihexamethylentriamin genannt. Die Viskosität der Kondensationsprodukte aus Aminen und Dicarbonsäuren beträgt 40 bis 1 800 mPas und sollte nicht über 2 500 mPas (gemessen in 50%iger wäßriger Lösung bei 20°C) liegen.

Zur Herstellung der erfindungsgemäßen Produkte werden die reaktive Endgruppen enthaltenden Polyäther der Formel I mit den Verbindungen, die mindestens 4 basische NH—Gruppen enthalten, im

Gewichtsverhältnis 0,8:1 30:1 umgesetzt. Dabei erhält man vernetzte stickstoffhaltige Kondensationsprodukte, die in Wasser löslich sind und deren Viskosität in wäßriger Lösung bei Temperaturerhöhung ansteigt und beim Abkühlen wieder sinkt. Die Viskositätsänderungen in wäßriger Lösung sind also reversibel. Die Kondensation der beiden Komponenten wird so geführt, daß wasserlösliche Stoffe erhalten werden. Die Umsetzung wird in einem polaren Lösungsmittel durchgeführt. Man kann jedoch auch so verfahren, daß man die Polyamine in einem Reaktionsgefäß vorlegt und die andere Komponente so lange zugibt, bis die Viskosität des Reaktionsgemisches ansteigt. Dann verdünnt man das Reaktionsgemisch mit einem Lösungsmittel und gibt weitere Mengen an Verbindungen der Formel I zu. Geeignete Lösungsmittel sind beispielsweise Wasser, Alkohole, wie Methanol, Äthanol, Propanole, Äthylenglykol, Propylenglykol sowie von den mehrwertigen Alkoholen abgeleitete Monoalkyläther, z.B. Monomethylglykoläther sowie Di- und Triglykoläther. Als Lösungsmittel eignen sich außerdem Dioxan und Tetrahydrofuran sowie Mischungen von polaren Lösungsmitteln mit Wasser, z.B. Mischungen aus Wasser und Tetrahydrofuran im Verhältnis 1:1.

Die wasserlöslichen, vernetzten stickstoffhaltigen Kondensationsprodukte können auch durch Umsetzung von Lösungen der Verbindungen der Formel I mit den NH—Gruppen haltigen Verbindungen erhalten werden. Diejenige Komponente, die im Überschuß eingesetzt wird, wird in der Regel im Reaktionsgefäß vorgelegt. Die Kondensationsreaktion kann diskontinuierlich und auch kontinuierlich durchgeführt werden. Besonders einheitliche Produkte erhält man, wenn man zunächst etwa 5 bis 15% der umzusetzenden Stoffe in einem Reaktionsgefäß kondensiert und die restlichen Einsatzstoffe absatzweise oder kontinuierlich zuführt. Die Zugabe der Ausgangsstoffe wird dabei der Umsetzungsgeschwindigkeit angepaßt. Falls die Viskosität zu stark im Verlaufe der fortschreitenden Reaktion ansteigen sollte, empfiehlt es sich, die Feststoffkonzentration im Reaktionsgemisch durch Zugabe von Lösungsmittel zu erniedrigen, damit eine gute Durchmischung der Reaktionspartner gewährleistet ist. Die Reaktionstemperatur kann in einem weiten Bereich schwanken, sie liegt im allgemeinen zwischen Raumtemperatur und 160°C. Verwendet man Wasser als alleiniges Lösungsmittel, so arbeitet man vorzugsweise bei einer Temperatur in dem Bereich von 40 bis 80°C.

Die erfindungsgemäßen Kondensationsprodukte können nach dem Verfahren der umgekehrten Suspensionspolymerisation hergestellt werden. In diesem Fall dispergiert man eine wäßrige Lösung von Verbindungen der Formel I und den mindestens 4 NH—Gruppen enthaltenden Verbindungen in einem mit Wasser nicht mischbaren Lösungsmittel, z.B. aliphatischen oder aromatischen Kohlenwasserstoffen bzw. Chlorkohlenwasserstoffen. Man erhält dann Dispersionen der erfindungsgemäßen wasserlöslichen, vernetzten stickstoffhaltigen Kondensationsprodukte.

Die erfindungsgemäß hergestellten Produkte können einer Reihe von Anwendungen zugeführt werden. Sie verhindern beispielsweise beim Pigmentfärben und Ausrüsten von Geweben die Farbstoffmigration und eine Belagsbildung auf den Walzen. Für diesen Anwendungszweck werden die erfindungsgemäßen Stoffe in einer Menge von 0,05 bis 7%, bezogen auf die Druckpaste, eingesetzt. In der Galvanoindustrie bewirkt ein Zusstz von 0,01 bis 20% zu elektrolytischen Vorbehandlungsbädern eine erhöhte Glanzbildung bei der elektrolytischen Abscheidung von Metallen. Die Produkte können außerdem zur Verbesserung des Viskositätsverhaltens wäßriger Systeme, wie Polymerlösungen und Polymerisatdispersionen eingesetzt werden. So bewirkt beispielsweise ein Zusatz von 1 bis 20% eines erfindungsgemäßen Produkts zu einer Polymerlösung oder -Dispersion, daß die Viskosität der Lösungen bzw. Dispersionen beim Erhitzen nicht sinkt.

Die Erfindung wird anhand der folgenden Beispiele näher erläutert. Die in den Beispielen angegebenen Teile sind Gewichtsteile, die Prozentangaben beziehen sich auf das Gewicht der Stoffe.

Beispiel 1

100 Teile einer 25%iger wäßrigen Lösung eines Polyathylenimins der Formel

$$H_2N-(-CH_2-CH_2-\underset{\begin{array}{c}|\\H\end{array}}{N}-)_{35}H$$

versetzt man bei Raumtemperatur mit 480 Teilen einer 33%igen wäßrigen Lösung eines Polyäther Vernetzers der Formel

$$H(-OCH_2-\underset{\begin{array}{c}|\\CH_2Cl\end{array}}{CH}-)_{2,25}O(-CH_2-CH_2-O)_{113}-(CH_2-\overset{\begin{array}{c}CH_3\\|\end{array}}{CH}O)_{44}-(CH_2-CH_2-O-)_{113}-$$

$$(CH_2-\underset{\begin{array}{c}|\\CH_2Cl\end{array}}{CH}-O-)_{2,25}H \qquad (III)$$

(x:y = 2,56:1)

und verdünnt die Mischung anschließend mit 280 Teilen Wasser. Die Mischung wird auf eine Temperatur von 60 bis 70°C aufgeheizt und 4 Stunden bei dieser Temperatur gehalten. Während der Kondensationsreaktion steigt die Viskosität der wäßrigen Lösung stark an. Im Verlauf der Kondensation gibt man daher weitere 733 Teile Wasser zu, so daß man eine 10%ige wäßrige Lösung eines vernetzten stickstoffhaltigen Kondensationsproduktes erhält. Eine 2,5%ige wäßrige Lösung des Kondensationsprodukts hat bei einer Temperatur von 20°C eine Viskosität von 5 mPas, bei 50°C eine Viskosität von 150 mPas und bei einer Temperatur von 80°C eine Viskosität von 380 mPas.

Das Kondensationsprodukt eignet sich als Hilfsmittel beim Pigmentfärben und Ausrüsten von Geweben. Gibt man beispielsweise dem Färbebad 1% des erfindungsgemäß hergestellten Kondensationsproduktes zu, so wird beim Aufbringen der Druckpaste auf das Gewebe eine Belagsbildung auf den Walzen unterbunden und bei der Trocknung des Gewebes die Farbstoffmigration verhindert.

In der Glavanotechnik bewirkt ein Zusatz von 0,01 bis 20% zu vorbehandlungsbädern bei der elektrolytischen Metallabscheidung eine erhöhte Glanzbildung.

Beispiel 2

400 Teile einer 50%igen wäßrigen Lösung eines Dichlorhydrinäthers der allgemeinen Formel

$$HO-\underset{CH_2Cl}{\underset{|}{CH}}-CH_2-O-(CH_2-CH_2-O-)_x(CH_2-\underset{CH_3}{\underset{|}{CH}}-O-)_y(CH_2-CH_2-O)_x-CH_2-\underset{CH_2Cl}{\underset{|}{CH}}-OH$$

in der x = 75, y = 30 und das Verhältnis X:y = 2,5:1 ist, werden bei 35°C mit 4,6 Teilen konz. NaOH versetzt. Nach dreistündiger Reaktionszeit beträgt der Epoxid-Wert des Reaktionsprodukts (Diepoxid) 0,19 mVal/g.

Zu 200 Teilen einer 20%igen wäßrigen Lösung des im Beispiel 1 angegebenen Polyamins gibt man 520 Teile der Diepoxidlösung und läßt bei 55° reagieren. Während der Reaktion werden 1 040 Teile Wasser in drei Portionen zugegeben.

Die Lösung wird gerührt und auf eine Temperatur von 55°C erhitzt. Während der Reaktion steigt die Viskosität der wäßrigen Lösung stark an. Um eine gute Durchmischung der Komponenten zu gewährleisten, ist as erforderlich, Wasser zuzusetzen. Insgesamt wurden 1 040 Teile Wasser in drei Portionen zugegeben. Eine 17%ige wäßrige Lösung des stickstoffhaltigen Kondensationsproduktes hatte bei einer Temperatur von 20°C eine Viskosität von 280 mPas und bei 80°C eine Viskosität von 36 000 mPas.

Das Reaktionsprodukt wird als Antimigrationsmittel in Pigmentdruckpasten verwendet.

Beispiel 3

400 Teile einer 50%igen wäßrigen Lösung des im Beispiel 1 beschriebenen Vernetzers der Formel III werden mit 3 Teilen Natronlauge bei einer Temperatur von 30°C innerhalb 4 Stunden zu einem Diepoxid der Formel

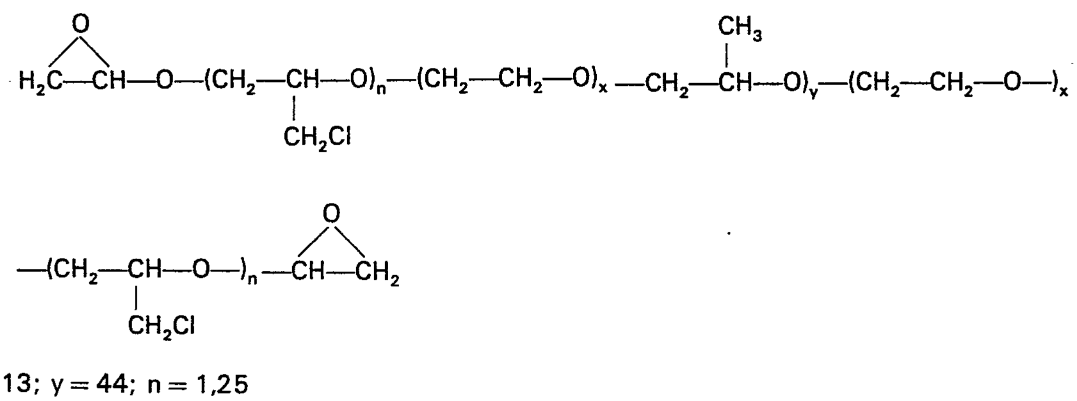

(IV)

x = 113; y = 44; n = 1,25

umgesetzt. Der Epoxidwert der 40%igen wäßrigen Lösung beträgt 0,055 mVal/g.

300 Teile einer 33%igen wäßrigen Lösung des Diepoxids werden mit 50 Teilen einer 20%igen wäßrigen Lösung des im Beispiel 1 beschriebenen Polyamins versetzt. Die beiden Reaktionspartner werden auf eine Temperatur von 50°C erhitzt. Nach 4 Stunden ist die Reaktion beendet. Man gibt 200 Teile Wasser zu und erhält eine 20%ige wäßrigen Lösung eines stickstoffhaltigen vernetzten Kondensationsprodukts. Viskositätsverhalten einer 5%igen wäßrigen Lösung:

| | 20° | 50° | 80° |
|---|---|---|---|
| mPas | 17 | 590 | 2 700 |

Imprägniert man ein Glasfaservlies mit einer Farbstoffdispersion, die 0,4% des vernetzten stickstoffhaltigen Kondensationsprodukts enthält, so zieht der Farbstoff gleichmäßig auf. Nach dem Trocknen erhält man ein egal gefärbtes Vlies. Bindemittel und Farbstoff sind im Vlies gleichmäßig verteilt.

Beispiel 4

300 Teile eines Blockcopolymeren der Formel

$$HO-(CH_2-CH_2-O)_x-(CH_2-\overset{\overset{CH_3}{|}}{CH}-O)_y-(CH_2-CH_2-O)_x-H \qquad (V)$$

$x = 113$; $y = 44$; $x:y = 2{,}56:1$

werden in 300 Teilen Dioxan gelöst und auf eine Temperatur von 40°C erhitzt. Man leitet dann 4 Stunden lang Phosgen in die Lösung ein. Danach treibt man das überschüssige Phosgen mit Stickstoff aus und destilliert das Dioxan unter vermindertem Druck ab. Zu 300 Teilen einer 33%igen wäßrigen Lösung des so hergestellten Chlorkohlensäurediesters werden 50 Teile einer 20%igen wäßrigen Lösung des im Beispiel 1 beschriebenen Polyamins gegeben. Die Mischung wird dann auf eine Temperatur von 70°C erhitzt. Innerhalb von 4 Stunden ist die Reaktion beendet. Man gibt 200 Teile Wasser zu und erhält eine 20%ige Lösung eines vernetzten stickstoffhaltigen Kondensationsproduktes. Eine 10%ige wäßrige Lösung zeigt folgendes Viskositätsverhalten:

| | 20° | 50° | 80° |
|---|---|---|---|
| mPas | 12 | 500 | 560 |

Das Produkt wird als Zusatz zu Papierstreichfarben in Mengen von 2 bis 10 Gew.%, bezogen auf die Papierstreichfarbe, verwendet.

Beispiel 5

400 Teile des Blockcopolymerisates der Formel (V) (vgl. Beispiel 4) werden in 300 Teilen Dioxan gelöst, das drei Teile Pyridin enthält. Dann gibt man 6 Teile Phosphortrichlorid hinzu und hydrolysiert die Reaktionsmischung nach 4 Stunden durch Zugabe von Wasser und 3 Teilen 48%iger Natronlauge. Bei einer Temperatur von 80°C werden 80 Teile der erhaltenen Dihalogenverbindung in 237 Teilen Wasser gelöst, mit 50 Teilen einer 20%igen wäßrigen Lösung des im Beispiel 1 beschriebenen Polyamins umgesetzt. Nach einer Reaktionszeit von 140 Minuten fügt man 3 Teile konzentrierte Natronlauge zu und erhitzt das Reaktionsgemisch 3 Stunden auf eine Temperatur von 85°C. Anschließend fügt man 15 Teile Ameisensäure zu und verdünnt die Mischung mit 145 Teilen Wasser auf einen Feststoffgehalt von 20%. Eine 20%ige wäßrige Lösung des vernetzten stickstoffhaltigen Kondensationsprodukts zeigt folgendes Viskositätsverhalten:

| | 20° | 50° | 80° |
|---|---|---|---|
| mPas | 30 | 50 | 150 |

Beispiel 6

In 500 Teilen einer 50%igen wäßrigen Lösung eines Chlorhydrinäthers der allgemeinen Formel

$$H-(O-CH_2-\underset{\underset{CH_2Cl}{|}}{CH}-)_nO(CH_2-CH_2-O-)_x-(CH_2-\overset{\overset{CH_3}{|}}{CH}-O)_y-(CH_2-CH_2-O-)_x-$$

$$(CH_2-\underset{\underset{CH_2Cl}{|}}{CH}-O-)_nH, \qquad (VI)$$

in der $x = 75$; $y = 30$; $n = 2{,}25$, $x:y = 2{,}5:1$ bedeutet, werden 30 Teile einer 50%igen Lösung von N,N'-Bis-(3-aminopropyl)-äthylendiamin gelöst. Bei pH 9 bis 10 und 80° reagieren die Substanzen. Nach fünf Stunden gibt man nochmals 220 Teile des Chlorhydrinäthers zu und verdünnt das Reaktionsgemisch anschließend mit 940 Teilen Wasser auf einen Gehalt von 20% an Kondensationsprodukt. Viskositätsverhalten einer 20%igen wäßrigen Lösung:

| | 20° | 50° | 80° |
|---|---|---|---|
| mPas | 145 | 3 200 | 25 300 |

Beispiel 7

230 Teile eines Amingemisches aus Teilen Äthylendiamin, 45 Teilen 3-Aminopropyl-äthylendiamin und 35 Teilen N,N'-Bis(3-aminopropyl)-äthylendiamin werden in 384 Teilen Wasser gelöst und bei 95°C mit 382 Teilen eines Chlorhydrinäthers der Formel

$$H-(-O-\underset{\substack{|\\CH_2Cl}}{CH}-CH_2)_{1.1}O-(-CH_2-CH_2-O)_4-(-\underset{\substack{|\\CH_2Cl}}{CH}-CH_2-O-)_{1.1}H \qquad (VII)$$

innerhalb von 6 Stunden vernetzt. Der pH wird während der Reaktion durch Zugabe von 117 Teilen 48%iger Natronlauge bei 10 gehalten. Die Viskosität einer 50%igen Harzlösung beträgt 320 mPas (20°C). Durch Verdünnen mit Wasser wird der Wirkstoffgehalt auf 20% eingestellt. 50 Teile einer so erhaltenen 20%igen Harzlösung werden bei einer Temperatur von 75°C innerhalb von 8 Stunden mit 246 Teilen einer 50%igen wäßrigen Lösung des Vernetzers der Formel III (vgl. Beispiel 1) umgesetzt. Der Vernetzer wird innerhalb der Reaktionszeit kontinuierlich zugesetzt. Außerdem wird die Reaktionsmischung mit 1 030 Teilen Wasser verdünnt, das in vier Portionen während der Kondensation zugefügt wurde. Eine 10%ige wäßrige Lösung zeigt folgendes Viskositätsverhalten:

| | 20° | 50° | 80° |
|---|---|---|---|
| mPas | 60 | 14 500 | >100 000 |

Tränkt man ein Flachvlies mit einem üblichen Bindemittel und einer üblichen Farbstoffdispersion, die 0,3% des oben beschriebenen, wasserlöslichen, stickstoffhaltigen Kondensationsproduktes enthält, so erhält man nach dem Abquetschen und Trocknen des Vlieses eine egal gefärbte und gleichmäßig verfestigte Ware.

Beispiel 8

1 287 Teile des in Beispiel 7 beschriebenen Amingemisches werden mit 300 Teilen Wasser und unter Rühren und Eiskühlung mit 533 Teilen Epichlorhydrin umgesetzt. Die Reaktionstemperatur wird auf 90°C gehalten. Nach 5 Stunden gibt man 1 547 Teile Wasser zu.

50 Teile einer 20%igen wäßrigen Lösung dieses Harzes werden bei einem pH-Wert von 9 bis 10 mit 344 Teilen einer 50%igen Vernetzerlösung umgesetzt, die im Beispiel 1 beschrieben ist. Der pH—Wert wird durch Zugabe von 6 Teilen konzentrierte Natronlauge konstant gehalten. Da die Viksosität des Gemisches ständig ansteigt, gibt man während der Reaktion kontinuierlich 1 420 Teile Wasser zu. Die Reaktionstemperatur liegt in dem Bereich von 60 bis 85°C. Man erhält eine 10%ige wäßrige Lösung eines vernetzten, stickstoffhaltigen Kondensationsproduktes. Die 10%ige wäßrige Lösung zeigt folgendes Viskositätsverhalten:

| | 20° | 50° | 80° |
|---|---|---|---|
| mPas | 10 | 450 | 680 |

Beispiel 9

Zu 340 Teilen Diäthylentriamin werden unter guter Durchmischung 438 Teile Adipinsäure bei einer Temperatur von 120°C zugegeben. Die Reaktionstemperatur wird dann auf 160 bis 180°C gesteigert und aus dem Reaktionsgemisch Wasser abdestilliert, bis die Säurezahl des Reaktionsprodukts kleiner als 10 ist. Danach wird die Mischung abgekühlt und durch Zugabe von 676 Teilen Wasser auf einen Feststoffgehalt von 50% verdünnt.

60 Teile der 50%igen Lösung des Polyamidoamins werden bei Raumtemperatur mit einer Lösung, die aus 626 Teilen Wasser, 4-Teilen konzentrierter Natronlauge und 270 Teilen eines Dichlorhydrinäthers gemäß Beispiel 1 besteht, versetzt. Nach einer Reaktionszeit von 4 Stunden bei einer Temperatur von 60 bis 70°C verdünnt man durch Zugabe von 530 Teilen Wasser und stellt das Reaktionsgemisch durch Zusatz von 10 Teilen Ameisensäure auf einen pH—Wert von 5 ein. Eine 10%ige wäßrige Lösung zeigt folgendes Viskositätsverhalten:

| | 20° | 50° | 80° |
|---|---|---|---|
| mPas | 25 | 37 000 | 75 000 |

Beispiel 10

690 Teile des Dichlorhydrinäthers der Formel

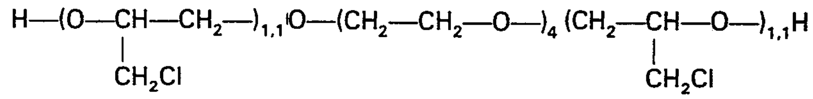

werden in 296 Teilen Isopropanol gelöst und unter einem Druck von 20 bis 40 bar bei 120°C mit 118 Teilen Ammoniak umgesetzt. Nach 6 Stunden wird das Reaktionsgemisch abgekühlt und entspannt. Das überschüssige Ammoniak zieht man bei vermindertem Druck ab. 7 Teile dieses Polyätheramins werden bei 70 bis 85°C mit einer Lösung aus 100 Teilen des Dichlorhydrinäthers aus Beispiel 1, 200 Teilen Wasser und 5 Teilen konzentrierter Natronlauge um gesetzt. Innerhalb von 4 Stunden bei 70 bis 85°C ist die Vernetzungsreaktion beendet. Das Reaktionsgemisch wird dann mit 213 Teilen Wasser verdünnt und mit 10 Teilen Ameisensäure auf pH 4 eingestellt.

Viskositätsverhalten der 20%igen Lösung:

| | 20° | 50° | 80° |
|---|---|---|---|
| mPas | 210 | 18 350 | >105 000 |

Das Kondensationsprodukt kann als Kaltschmiermittel beim Schneiden von Metallen verwendet werden.

Beispiel 11

300 Teile einer 20%igen Lösung eines Polyäthylenimins, das ein mittleres Molekulargewicht von 21 000 hat, wurden bei einer Temperatur von 65 bis 80°C mit 270 Teilen einer 22%igen wäßrigen Lösung des Dichlorhydrinäthers innerhalb von 7 Stunden vernetzt, der im Beispiel 6 angegeben ist. Während der Reaktionszeit wurden 597 Teile Wasser zugegeben. Nach dem Abkühlen wird der pH—Wert des Reaktionsgemisches durch Zugabe von 27 Teilen Ameisensäure auf einen Wert von 8 eingestellt. Viskositätsverhalten einer 10%igen wäßrigen Lösung:

| | 20° | 50° | 80° |
|---|---|---|---|
| mPas | 1 200 | 1 630 | 1 710 |

Beispiel 12

370 Teile einer 46,5%igen Lösung eines Polyäthylenimins gemäß Beispiel 1 wurden bei 50°C unter Kühlung mit 126 Teilen Dimethylsulfat versetzt. Das Gemisch läßt man zwei Stunden bei 50°C nochmals zwei Stunden bei 80°C reagieren. Zu 400 Teilen einer 20%igen wäßrigen Lösung des methylierten Polyäthylenimins gibt man bei einer Temperatur von 70 bis 85°C 586 Teile einer 50%igen wäßrigen Lösung des Dichlorhydrinäthers der allgemeinen Formel

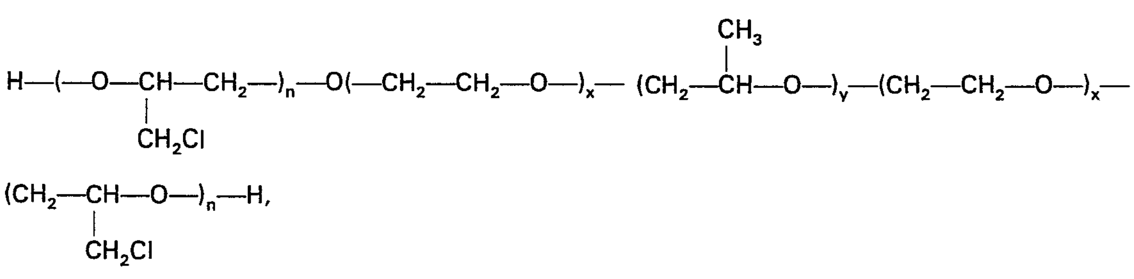

in der $x = 75$; $y = 30$; $n = 1,5$ und das Verhältnis $x:y = 2,5:1$ ist, und 38 Teilen konzentrierter Natronlauge. Während der vierstündigen Reaktionszeit verdünnt man die Mischung kontinuierlich mit 634 Teilen Wasser auf 20%. Viskositätsverhalten einer 10%igen Lösung:

| | 20° | 50° | 80° |
|---|---|---|---|
| mPas | 39 | 800 | 5 000 |

Das Kondensationsprodukt wird in Abschreckbädern eingesetzt.

Beispiel 13

127 Teile eines Polyäthylenimins mit einem mittleren Molekulargewicht von 800 werden in Form einer 50%igen Lösung in einem Reaktionsgefäß vorgelegt und bei einer Temperatur von 25°C langsam mit 520 Teilen einer 25%igen wäßrigen Lösung von Natriumvinylsulfonat vesetzt. Nach einer Reaktionszeit von 5 Stunden bei einer Temperatur von 80°C ist das gesamte Vinylsulfonat an Polyäthylenimin addiert. Der Anteil an tertiärem Amin hat sich um 30% des Gesamtamingehaltes erhöht.

90 Teile einer 30%igen wäßrigen Lösung des oben genannten Reaktionsproduktes werden mit 495 Teilen einer 33%igen wäßrigen Lösung des Dichlorhydrinäthers gemäß Beispiel 1 innerhalb von 4 Stunden bei einer Temperatur von 80°C vernetzt. Während der Vernetzungsreaktion gibt man kontinuierlich 280 Teile Wasser zu, die 5 Teile Natronlauge enthalten. Danach kühlt man die Mischung ab und erhält durch Zugabe von 934 Teilen Wasser eine 10%ige wäßige Lösung eines vernetzten, stickstoffhaltigen Kondensationsprodukts. Eine 5%ige wäßrige Lösung dieses Kondensationsprodukts zeigt folgendes Viskositätsverhalten:

| | 20° | 50° | 80° |
|---|---|---|---|
| mPas | 20 | 600 | 2 010 |

Das stickstoffhaltige, vernetzte Kondensationsprodukt bewirkt als Zusatz in Mengen von 0,001 bis 5% zu galvanischen Bädern eine Verbesserung der Glanzbildung der behandelten Metalle.

Beispiel 14

212 Teile eines Polyäthylenimins mit einem mittleren Molekulargewicht von 800 werden in einem mit Rührer versehenen Reaktionsgefäß als 50%ige wäßrige Lösung vorgelegt. Bei 60°C gibt man unter Kühlung portionsweise 145 Teile Natriumchloracetat zu. Nach etwa vier Stunden ist die Reaktion beendet. Es liegt die dem Natriumchloracetat entsprechende Menge an freien Chlorid-Ionen vor (2,2 mVal/g). Von dem mit Carboxymethylgruppen substituierten Polyäthylenimin werden 20,1 Teile als 50%ige wäßrige Lösung mit 495 Teilen einer 33%igen wäßrigen Lösung des Dichlorhydrinäthers gemäß Beispiel 1 versetzt. Zum Verdünnen auf 20% werden während der Reaktion bei 80°C 330 Teile Wasser zugefügt. Nach 4,5 Stunden kühlt man die Mischung ab und stellt durch weitere Wasserzugabe eine 10%ige Lösung her.

Viskositätsverhalten der 10%igen Lösung:

| | 20° | 50° | 80° |
|---|---|---|---|
| mPas | 115 | >105 000 | >105 000 |

Die Lösung eignet sich 5%ig als Verdicker für Papierstreichfarben.

Beispiel 15

14,4 Teile einer 20%igen wäßrigen Lösung eines Polyäthylenimins mit einem mittleren Molekulargewicht von 800 werden mit 38,4 Teilen einer 25%igen Lösung des Vernetzers gemäß Beispiel 6 auf 60°C erhitzt. Während 2,5 Stunden wird mit 36,3 Teilen Wasser verdünnt. Man erhält eine 14%ige wäßrige Lösung eines Kondensationsprodukts. 20 Teile dieser Polyätheraminlösung versetzt man bei 60 bis 70°C mit 0,4 Teilen konzentrierter Natronlauge. Danach läßt man die Lösung 5 Stunden mit 6,6 Teilen einer 18%igen wäßrigen Lösung eines Chlorhydrinäthers der allgemeinen Formel

$$H-(-O-\underset{CH_2Cl}{CH}-CH_2-)_n-O-(-CH_2-CH_2-O-)_x-(CH_2-\underset{CH_2Cl}{CH}\ O-)_n-H$$

mit n = 1,3 und x = 34 reagieren. Dabei wird kontinuierlich mit 61,3 Teilen Wasser verdünnt. Nach der Reaktion stellt man die Lösung durch Zugabe von 0,4 Teilen Ameisensäure auf ein pH von 7.

Viskositätsverhalten der 4,5%igen wäßrigen Lösung:

| | 20° | 50° | 80° |
|---|---|---|---|
| mPas | 170 | 250 | 1 950 |

Das Produkt wird in Form einer 0,3%igen wäßrigen Lösung als Abschreckbad für die Härtung von Stählen verwendet. Beim Härten eines Stahles (K 8, 30 CrMo V 9) erhält man eine Härtekurve, die der bei der Härtung mit Abschrecköl gleicht. Das Produkt ist in der selben Konzentration auch als Abschreckmittel für induktive Härtung geeignet.

Beispiel 16

In einem Kolben werden 225,6 Teile Tris-(3-aminopropyl) amin vorgelegt. Bei Raumtemperatur gibt man 60 Teile Harnstoff zu und erhöht die Temperatur der Mischung innerhalb von 45 Minuten auf 140°C. Dabei tritt eine starke Ammoniak-Entwicklung ein. Nach 60 Minuten Reaktionszeit wird mit 200 Teilen Wasser verdünnt und der Feststoffgehalt bestimmt (52,3%). Mit 71,4 Teilen Wasser wird auf einen Gehalt von 45% Wirkstoffgehalt verdünnt (Säurezahl 0,47 mVal/g; Aminzahl 11,9 mVal/g). 50 Teile der 45%igen Lösung werden mit 750 Teilen einer 15%igen wäßrigen Lösung des Polyäthervernetzers gemäß Beispiel 1 versetzt. Anschließend erhitzt man die Mischung. Während der dreistündigen Reaktionszeit bei 80°C gibt man noch 66,5 Teile Wasser, die 4 Teile konzentrierte NaOH enthalten, zu. Anschließend kühlt man ab, stellt mit 20 Teilen Ameisensäure auf pH 4 und verdünnt mit weiteren 238 Teilen Wasser auf 12% Wirksubstanz.

Viskositätsverhalten einer 5%igen Lösung:

| | 20° | 50° | 80° |
|---|---|---|---|
| mPas | 10 | 1 630 | 12 100 |

Das Produkt eignet sich bei 3% igem Zusatz als Verdicker für Druckpasten beim Textildruck. Eine Durchschlagen des Farbstoffs wird dadurch verhindert, so daß die Drucke deutlich brillanter wirken. Eine 0,4%ige Lösung eignet sich als Abschreckmittel für Aluminium und Aluminiumlegierungen.

**Patentansprüche**

Wasserlösliche, vernetzte stickstoffhaltige Kondensationsprodukte, deren Viskosität in wäßriger Lösung bei Temperaturerhöhung ansteigt und bei Temperaturerniedrigung wieder abfällt, hergestellt durch Umsetzung eines Blockcopolymerisates der Formel

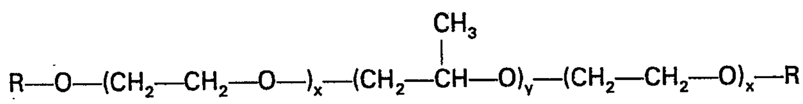 (I),

in der R = 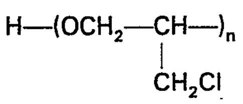 mit n = 0,75 bis 3,

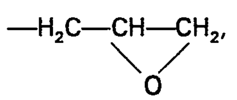, 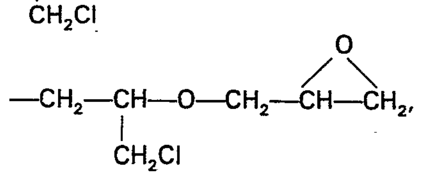, 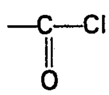 oder $—CH_2—CH_2—Cl$ und

x = 50 bis 250, y = 20 bis 100 und das Verhältnis x:y = 6,5:1 bis 1:15 ist,

mit mindestens 4 basische NH-Gruppen enthaltenden Verbindungen aus den Gruppen

1. Polyaminen der Formel

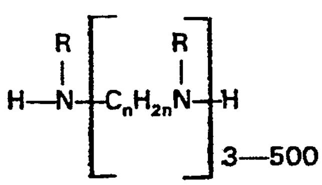

R = H,
$C_1$— bis $C_4$—Alkyl,
$C_1$— bis $C_6$—Alkylsulfonate
und $—CH_2—COOH$, wobei mindestens 2R = H n = 2—4,

2. Kondensationsprodukten von Ammoniak und Aminen mit Äthylenchlorid, Epichlorhydrin oder kurzkettigen Dichlorhydrinäthern,

3. Umsetzungsprodukten aus kurzkettigen Diepoxiden mit Diäthylentriamin oder Methylamin,

4. Kondensationsprodukten aus Harnstoff und Di- oder Polyaminen oder

5. Kondensationsprodukten aus Polyaminen mit Dicarbonsäuren, die 4 bis 10 Kohlenstoffatome enthalten,

im Gewichtsverhältnis 0,8:1 bis 30:1 in einem polaren Lösungsmittel bei Temperaturen von 20 bis 180°C.

2. Wasserlösliche, vernetzte stickstoffhaltige Kondensationsprodukte gemäß Anspruch 1, dadurch gekennziechnet, daß die Verbindungen der Formel I mit Polyaminen, die mindestens 4 basische NH— Gruppen im Molekül enthalten, umgesetzt werden.

3. Wasserlösliche, vernetzte stickstoffhaltige Kondensationsprodukte gemäß den Ansprüchen 1 und 2, dadurch gekennzeichnet, daß man als Verbindungen, die mindestens 4 basische NH—Gruppen enthalten, Polyäthylenimin verwendet.

4. Verwendung der wasserlöslichen, vernetzten stickstoffhaltigen Kondensationsprodukte gemäß den Ansprüchen 1 bis 3 zur Verbesserung des Viskositätsverhaltens wäßriger Systeme, wie Polymerlösungen und Polymerisatdispersionen.

5. Verwendung der wasserlöslichen, vernetzten stickstoffhaltigen Kondensationsprodukte gemäß den Ansprüchen 1 bis 3 als Zusatz zu Galvanisierbädern.

## Claims

1. A water-soluble, crosslinked nitrogen-containing condensation product, the viscosity of which, in aqueous solution, increases with increasing temperature, obtained by reacting a block copolymer of the formula:

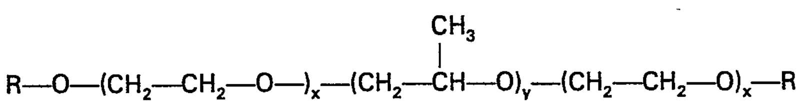 (I),

where R is 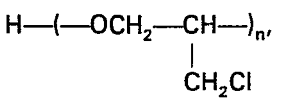 n being from 0.75 to 3,

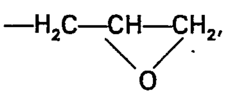 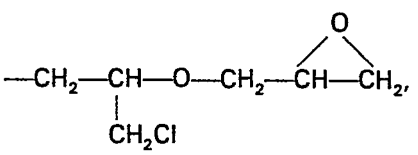 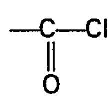 or $—CH_2—CH_2—Cl$

x is from 50 to 250, y is from 20 to 100, and the ratio of y to y is from 6.5 to 1:15, with a compound having at least four basic NH groups and selected from the groups:

1. Polyamines of the formula

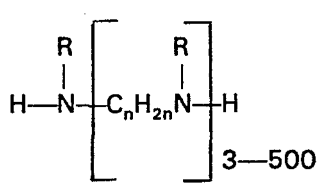

where R is H, alkyl of 1 to 4 carbon atoms, $C_1$ to $C_6$ alkyl sulfonate or $—CH_2—COOH$, at least two of the R's being H and n is from 2 to 4;

2. Condensation products of ammonia or an amine with ethylene chloride, epichlorohydrin or a short-chain dichlorohydrin ether;

3. Reaction products of a short-chain diepoxide with diethylenetriamine or methylamine;

4. Condensation products of urea and a diamine or polyamine; or

5. Condensation products of a polyamine with a dicarboxylic acid of 4 to 10 carbon atoms,

in a polar solvent at a temperature of from 20 to 180°C in a weight ratio of from 0.8:1 to 30:1.

2. A water-soluble, crosslinked nitrogen-containing condensation product as claimed in claim 1, characterized in that a compound of the formula I is reacted with a polyamine having at least four basic NH groups in the molecule.

3. A water-soluble, crosslinked nitrogen-containing condensation product as claimed in claims 1 and 2, characterized in that polyethyleneimine is used as the compound having at least four basic NH groups.

4. Use of a water-soluble, crosslinked nitrogen-containing condensation product as claimed in claims 1 to 3 for improving the viscosity characteristics of aqueous systems, such as polymer solutions and polymer dispersions.

5. Use of a water-soluble, crosslinked nitrogen-containing condensation product as claimed in claims 1 to 3 as an electroplating bath additive.

**Revendications**

1. Produits de condensation azotés réticulés, solubles dans l'eau, dont la viscosité en solution aqueuse augmente, lorsque la température croît, et diminue à nouveau, lorsque la température diminue, préparés par réaction d'un copolymère à blocs de la formule

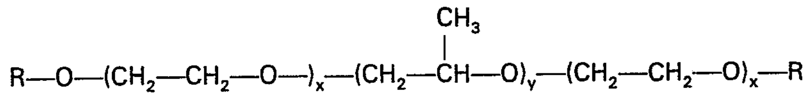 (I),

dans laquelle R = 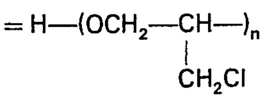 avec n = 0,75 à 3,

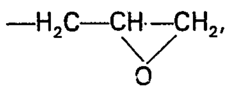 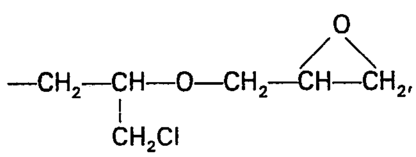 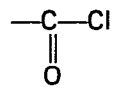 ou $-CH_2-CH_2-Cl$

x = 50 à 250, y = 20 à 100 et le rapport x:y = 6,5:1 à 1:15,

avec des composés contenant au moins 4 groupes —NH basiques choisis parmi:

1. les polyamines de la formule

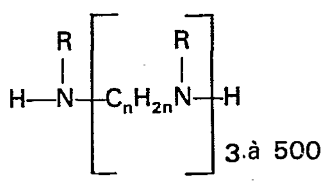 3

dans laquelle R = H, alkyle en $C_1$ à $C_4$, alkyl (en $C_1$ à $C_6$) — sulfonate ou $-CH_2-COOH$, au moins deux R étant H, et n = 2 à 4;

2. les produits de condensation de l'ammoniac et d'amines sur le chlorure d'éthylène, l'épichlorhydrine ou des éthers de dichlorhydrine à courte chaîne;

3. les produits de la réaction de diépoxydes à courte chaîne avec la diéthylène-triamine ou la méthyl-amine;

4. les produits de la condensation de l'urée et de diou de poly-amines;

5. les produits de la condensation de poly-amines et d'acides dicarboxyliques en $C_4$ à $C_{10}$;

dans des proportions en poids dans un rapport de 0,8:1 à 30:1 à une température comprise entre 20 et 180°C dans un solvant polaire.

2. Produits de condensation azotés réticulés, solubles dans l'eau, suivant la revendication 1, caractérisés en ce que l'on fait réagir les composés de la formule I avec des polyamines comprenant au moins quatre groupes —NH basiques dans leur molécule.

3. Produits de condensation azotés réticulés, solubles dans l'eau, suivant l'une des revendications 1 et 2, caractérisés en ce que l'on emploie en tant que composés comprenant au moins quatre groupes —NH basiques de la poly(éthylène-imine).

4. Utilisation des produits de condensation azotés réticulés hydrosolubles suivant l'une des revendications 1 à 3 pour améliorer le comportement rhéologique de systèmes aqueux tels que des solutions et dispersions de polymères.

5. Utilisation des produits de condensation azotés réticulés hydrosolubles suivant l'une des revendications 1 à 3 comme additifs pour bains d'èlectrolyse.